# EUROPÄISCHE PATENTSCHRIFT

(11) **EP 2 849 542 B1**
(45) Veröffentlichungstag und Bekanntmachung des Hinweises auf die Patenterteilung: **22.08.2018**
(21) Anmeldenummer: 13184321.1
(22) Anmeldetag: 13.09.2013
(51) Int. Cl.: H05H 1/34

(54) **Elektrodenaufbau für Plasmaschneidbrenner**
Electrode structure for plasma cutting torches
Structure d'électrodes pour torches de coupage au plasma

(43) Veröffentlichungstag der Anmeldung: 18.03.2015
(73) Patentinhaber: Kjellberg-Stiftung, 03238 Finsterwalde (DE)
(72) Erfinder: Reinke, Ralf-Peter, 03238 Finsterwalde (DE); Laurisch, Frank, 03238 Finsterwalde (DE); Krink, Volker, 03238 Finsterwalde (DE)
(74) Vertreter: Pfenning, Meinig & Partner mbB

(56) Entgegenhaltungen:
- EP-A2- 0 242 023
- US-A- 5 105 061
- US-A- 5 767 478

## Beschreibung

Die Erfindung betrifft einen Elektrodenaufbau für Plasmaschneidbrenner.

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, z. B. das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens.

Der Plasmastrahl kann in seinen Parametern durch die Gestaltung der Düse und Elektrode stark beeinflusst werden. Diese Parameter des Plasmastrahls sind z. B. der Strahldurchmesser, die Temperatur, Energiedichte und die Strömungsgeschwindigkeit des Gases.

Beim Plasmaschneiden wird das Plasma üblicherweise durch eine Düse, die gas- oder wassergekühlt sein kann, eingeschnürt. Dadurch können Energiedichten bis 2 x 10⁶ W/cm² erreicht werden. Im Plasmastrahl entstehen Temperaturen bis zu 30.000 °C, die in Verbindung mit der hohen Strömungsgeschwindigkeit des Gases sehr hohe Schneidgeschwindigkeiten an allen elektrisch leitfähigen Werkstoffen ermöglichen.

Ein Plasmabrenner besteht im Wesentlichen aus einem Plasmabrennerkopf 1, einer Elektrode 7 und einer Düse 4, weitere Bestandteile können eine Elektrodenaufnahme 6 zur Fixierung der Elektrode 7 und die Düsenhalterung 5 sowie die Düsenkappe 2 zur Fixierung der Düse 4 sein. Das Plasmagas PG wird durch die Plasmagasführung 3 in den Raum zwischen Elektrode 7 und Düse 4 zugeführt und strömt letztlich durch die Düsenbohrung 4.1 durch die Düse 4.

Moderne Plasmabrenner verfügen zusätzlich über eine Düsenschutzkappe 9 und eine Sekundärgasführung 9.1 über die ein Sekundärgas SG dem Plasmastrahl zugeführt wird. Oft werden die Düse 4 und die Elektrode 7 mit flüssigem Kühlmittel, z. B. Wasser gekühlt.

Das Plasmaschneiden ist heute ein etabliertes Verfahren zum Schneiden elektrisch leitender Werkstoffe wobei je nach Schneidaufgabe unterschiedliche Gase und Gasgemische eingesetzt werden.

Dafür werden dann unterschiedliche Elektroden 7 und Düsen 4 eingesetzt. Diese verschleißen während des Betreibens des Plasmabrenners und müssen dann ausgetauscht werden. Um einen Plasmabrenner für unterschiedliche Gase oder Gasgemische einsetzen zu können, sind die Plasmabrenner, Elektroden 7 und Düsen 4 so gestaltet, dass ein Plasmabrenner durch den Austausch der Elektroden 7 und Düsen 4 für unterschiedliche Gase eingesetzt werden kann.

Elektroden 7 bestehen in der Regel aus einem Elektrodenhalter 7.1 und einem Emissionseinsatz 7.3. Grundsätzlich kann zwischen zwei Bauformen unterschieden werden. Beim Schneiden mit sauerstoffhaltigen Plasmagasen wird in der Regel eine sogenannte Flachelektrode eingesetzt, d.h. der Emissionseinsatz 7.3 befindet sich mit Ausnahme seiner vorderen Emissionsfläche im Elektrodenhalter 7.1. Der Emissionseinsatz 7.3 besteht aus Hafnium oder Zirkon. Für Elektrodenhalter 7.1 werden Werkstoffe, die gut strom- und wärmeleitend sind, wie z. B. Kupfer oder Silber eingesetzt. Bei Elektroden 7 für das Schneiden mit nicht sauerstoffhaltigen Gasen oder Gasgemischen, z.B. Argon, Wasserstoff, Stickstoff wird Wolfram, oft mit Dotierungen (z.B. mit Lanthan), als Werkstoff für den Emissionseinsatz 7.3 verwendet. Dieser ist dann im Elektrodenhalter 7.1 befestigt, ragt aber im Gegensatz zur Flachelektrode aus diesem heraus und wird oft als Spitzenelektrode bezeichnet.

Es gibt auch Ausführungsformen, bei denen ein Emissionseinsatz 7.3 mit einem zusätzlichen Haltelement 7.2 verbunden ist und das Halteelement 7.2 wiederum mit dem Elektrodenhalter 7.1 verbunden ist.

So können der Elektrodenhalter 7.1 aus Kupfer, ein Halteelement 7.2 aus Silber und der Emissionseinsatz 7.3 aus Hafnium, Zirkonium oder Wolfram hergestellt sein. Natürlich sind auch unterschiedliche Legierungen aus Kupfer und Silber für Elektrodenhalter 7.1 und Halteelement 7.2 möglich. Elektrodenhalter 7.1 und Halteelement 7.2 können auch aus dem gleichen Werkstoff bestehen.

Die Verbindung von Elektrodenhalter 7.1 und Emissionseinsatz 7.3 oder die Verbindung zwischen Elektrodenhalter 7.1 und Halteelement 7.2 und/oder Emissionseinsatz 7.3 wird kraft-, form- und/oder stoffschlüssig erreicht.

Dabei kommt es bei der Verbindung darauf an, dass diese dauerhaft während des Betriebes aufrecht erhalten werden kann, dabei eine gute und möglichst homogene thermische und elektrisch leitende Verbindung eingehalten ist und bleibt.

Üblicherweise werden Emissionseinsätze 7.3 in eine Bohrung oder eine andere Form von Vertiefungen, die in einem Elektrodenhalter 7.1 oder einem Haltelement 7.2 ausgebildet ist, eingesetzt und darin dann durch eine stoffschlüssige Löt- oder Schweißverbindung, kraftschlüssig mittels Presspassung oder formschlüssig, beispielsweise mittels Gewinde befestigt.

Analog kann auch eine Verbindung zwischen Elektrodenhalter 7.1 und Haltelement 7.2 erreicht werden.

Aus triftigen Gründen sind dabei die Bohrungen oder andere Vertiefungsformen lediglich an einer Seite offen, so dass in die Öffnung eine Emissionseinsatz 7.3 bzw. eine Halteelement 7.2 eingeführt werden kann. Eine Bohrung kann beispielsweise als Sacklochbohrung ausgebildet werden. Es können aber auch zumindest teilweise konisch ausgebildete Vertiefungen für die Aufnahme eines Emissionseinsatzes 7.3 bzw. eines Halteelements 7.2 eingesetzt werden. Es müssen auch nicht zwingend rotationssymmetrische Querschnittsformen genutzt werden.

Die äußere Mantelfläche und die Dimensionierung von Emissionseinsatz 7.3 bzw. Halteelement 7.2 sind an die Geometrie und Dimensionierung einer Bohrung oder anderen Vertiefung komplementär angepasst.

Die Teile bzw. die nach dem Zusammenfügen gegenüberliegenden Flächen dieser Teile sind üblicherweise sehr eng zueinander toleriert, da die thermische Leitung zwischen den gefügten Teilen sehr gut sein muss. Der Abstand zwischen den gegenüberliegenden Flächen ist negativ (d. h. der Innendurchmesser ist kleiner als der Außendurchmesser, z. B. -0,1mm) bis "0".

Dabei besteht bei den so miteinander gefügten Teilen das Problem, das in einer Bohrung oder einer anders geformten Vertiefung ein mit Luft gefüllter Hohlraum ausgebildet ist. Der aber durch die sehr genaue Art der Fügung gegenüber der Umgebung gasdicht verschlossen ist. So kann sich nach dem Fügen im Inneren des Hohlraums ein Überdruck durch die enthaltene Luft infolge einer Temperaturerhöhung während des Betriebes eines Plasmaschneidbrenners auftreten, sich der Elektrodenaufbau beim Betreiben des Plasmaschneidbrenners erheblich erwärmt, dehnt sich die Luft aus und der Druck wird entsprechend erhöht. Dadurch kann die Fügeverbindung in unerwünschter Form lokal undefiniert oder im schlimmsten Fall vollständig gelöst werden. Es besteht sogar die Möglichkeit der Gefährdung durch entsprechend gelöste Teile, die mit hoher Beschleunigung aus dem Fügeverbund bewegt werden. Dieses Problem wird bei längerem Betrieb und bei größer werdendem Verschleiß kritischer, da die sich gegenüberliegenden Flächen der gefügten Teile durch den Rückbrand des Emissionseinsatzes, aber auch des zweiten Halteelements infolge Werkstoffabtrag verringern.

Ein weiteres Problem kann durch in einem Hohlraum enthaltene Feuchtigkeit auftreten. Dadurch kann es zu Korrosion oder auch Kavitation kommen. Durch den entsprechend dadurch hervorgerufenen Werkstoffabtrag können die Fügeverbindung, die thermische und/oder die elektrische Leitfähigkeit ebenfalls negativ beeinflusst werden.

So ist aus US 5,105,601 A betrifft eine entlüftbare Elektrode für Plasmabrenner.

In US 5,767,478 A ist ebenfalls ein Aufbau eines Plasmabrenners mit Elektrode beschrieben.

EP 0 242 023 A2 betrifft eine gekühlte Elektrode eines Plasmabrenners.

Es ist daher Aufgabe der Erfindung, einen Elektrodenaufbau für Plasmaschneidbrenner zur Verfügung zustellen, bei dem die Sicherheit, die Betriebssicherheit mit guter thermischer und elektrischer Leitfähigkeit bei miteinander gefügten Elektrodenhalter und Emissionseinsatz und ggf. einem zusätzlichen Haltelement zumindest über einen längeren Betriebszeitraum eingehalten werden kann.

Erfindungsgemäß wird diese Aufgabe mit einem Elektrodenaufbau, der die Merkmale der Ansprüche 1 oder 2 aufweist, gelöst. Vorteilhafte Ausgestaltungen und Weiterbildungen können mit in untergeordneten Ansprüchen bezeichneten Merkmalen realisiert werden.

Bei dem erfindungsgemäßen Elektrodenaufbau für Plasmaschneidbrenner ist zur Aufnahme eines Emissionseinsatzes eine einseitig in Richtung eines zu bearbeitenden Werkstückes offene Vertiefung oder Bohrung in einem Elektrodenhalter oder einem Haltelement ausgebildet. In der Bohrung oder Vertiefung kann der eingesetzte Emissionseinsatz kraft-, form- und/oder stoffschlüssig befestigt werden.

Zwischen einem in einer Vertiefung oder Bohrung und dem Emissionseinsatz ausgebildeten Hohlraum und der Umgebung ist mindestens ein Druckausgleichskanal durch den Emissionseinsatz hindurch und/oder zwischen einem äußeren Mantelflächenbereich des Emissionseinsatzes und der Innenwand der Vertiefung oder Bohrung, die im Halteelemente oder dem Elektrodenhalter ausgebildet ist, vorhanden.

In analoger Form kann auch mindestens ein Druckausgleichskanal zwischen einem in einer Vertiefung oder Bohrung und dem Haltelement ausgebildeten Hohlraum und der Umgebung ein Druckausgleichskanal durch das Haltelement hindurch und/oder zwischen einem äußeren Mantelflächenbereich des Haltelements und der Innenwand der Vertiefung oder Bohrung, die im Elektrodenelement oder dem Halteelement ausgebildet ist, vorhanden sein.

Ein Druckausgleichskanal kann als Bohrung, Nut oder eine Abflachung an einer äußeren Mantelfläche ausgebildet sein. Eine Bohrung kann durch ein Haltelement oder den Emissionseinsatz hindurch geführt sein. Eine Nut kann an einer Innenwand des Elektrodenhalters und/oder des Halteelements an der Innenwand im Bereich der Vertiefung oder Bohrung oder an der äußeren Mantelfläche des Halteelements und/oder des Emissionseinsatzes ausgebildet sein.

Es besteht auch die Möglichkeit, dass eine Nut oder Abflachung ausgehend vom Hohlraum bis in einen Bereich nahe der dem Werkstück zugewandten Stirnseite eines Halteelements und/oder Emissionseinsatzes geführt ist, so dass in diesem Bereich dieser Stirnseite ein radial umlaufender vollflächiger Kontakt zwischen der Innenwand des Elektrodenhalters und der äußeren Mantelfläche des Halteelements und/oder der Innenwand des Haltelements und der äußeren Mantelfläche des Emissionseinsatzes zumindest bei normaler Raumtemperatur und nach dem Einsetzen eines Halteelements und/oder Emissionseinsatzes in eine Bohrung oder Vertiefung eingehalten ist. Dadurch ist zumindest bei Raumtemperatur (ca. 20° C) ein so ausgebildeter Druckausgleichskanal verschlossen. Er kann aber zumindest temporär für einen Druckausgleich während des Einsetzens eines Halteelements und/oder eines Emissionseinsatzes temporär für den Druckausgleich genutzt werden, da während des Einsetzens über einen ausreichend großen Zeitraum im sich beim Einsetzen verkleinernden Hohlraum enthaltene Luft sukzessive in die Umgebung über einen so ausgebildeten Druckausgleichskanal entweichen kann und sich dadurch der Innendruck in einem Hohlraum , wenn überhaupt nur unwesentlich erhöht. Der entsprechend temporär wirkende Druckausgleichskanal wird erst kurz vor dem Erreichen der Endposition des jeweiligen in eine Bohrung oder Vertiefung eingeführten Halteelements und/oder Emissionseinsatzes verschlossen. In diesem Fall kann man von einem zumindest temporär wirkenden Druckausgleichskanal sprechen.

Bei geeigneter Dimensionierung und gewählter Fügeverbindungsart kann jedoch auch ein Druckausgleich erfolgen, wenn sich der Innendruck nachträglich infolge Erwärmung erhöht. Dabei sollte der Kontaktbereich zwischen der äußeren Mantelfläche von Halteelement und/oder Emissionseinsatz mit der Innenwand einer Bohrung oder Vertiefung, also der Bereich in dem keine Nut oder Abflachung an der dem Werkstück zugewandten Stirnseite an dem die jeweiligen Fügepartner (Elektrodenhalter, Halteelement und/oder Emissionseinsatz) in unmittelbarem berührenden Kontakt miteinander stehen eine entsprechend kleine Fläche einnehmen und eine Fügeverbindung gewählt worden sein, die eine Öffnung für einen Druckausgleich bei erhöhtem Innendruck in einem Hohlraum ermöglicht.

Sind Druckausgleichskanäle zwischen einem Hohlraum an einem Elektrodenhalter und einem Hohlraum zwischen einem Haltelement und Emissionseinsatz ausgebildet, sollten diese so angeordnet bzw. ausgebildet sein, dass sie miteinander kommunizieren.

Bei einem Druckausgleichskanal, der mit einer Nut oder Abflachung ausgebildet ist, kann im Fügebereich eines Emissionseinsatzes mit einem Halteelement oder einem Elektrodenhalter eine Kontaktfläche zwischen der äußeren Mantelfläche des Emissionseinsatzes oder des Halteelements und der Innenwand des Haltelementes oder des Elektrodenhalters von mindestens 90 %, bevorzugt mindestens 93 % und besonders bevorzugt von mindestens 96 % der gesamten Oberfläche im Fügebereich eingehalten sein, um möglichst gute Bedingungen für die thermische und elektrische Leitfähigkeit einhalten zu können.

Ein Druckausgleichskanal kann in einem Winkel in Bezug zur mittleren Längsachse M geneigt sein, wobei ein Neigungswinkel von maximal 45 °, bevorzugt maximal 30° und besonders bevorzugt von maximal 15° eingehalten sein sollte.
Am einfachsten ist es, wenn der Druckausgleichskanal parallel zur Längsachse M verläuft.

Eine Nut oder Abflachung, die einen Druckausgleichskanal bildet, kann auch spiralförmig ausgehend vom Hohlraum bis zur dem Werkstück zugewandten Stirnseite des Halteelements oder des Emissionseinsatzes ausgebildet sein.

Eine Bohrung oder Vertiefung kann zumindest in einem Bereich ausgehend von der Öffnung sich konisch verjüngend und/oder mit abgestuftem Innendurchmesser oder freiem Querschnitt ausgebildet sein. Eine äußere Mantelfläche des Halteelements und/oder des Emissionseinsatzes das/der in eine solche Bohrung oder Vertiefung eingesetzt und dort gefügt werden soll, sollte komplementär dazu ausgebildet sein.

Eine äußere Mantelfläche eines Haltelements und/oder eines Emissionseinsatzes in einem Winkel γ, δ im Bereich 1° bis 5°, bevorzugt 1° bis 3° in Bezug zur mittleren Längsachse geneigt und/oder eine Fase mit einem Winkel α im Bereich 10° bis 40°, bevorzugt 10° bis 20° an einer radial äußeren Stirnseitenkante ausgebildet sein. Dies erleichtert die Montage beim Fügen.

An einem mit einer Nut ausgebildeten Druckausgleichskanal kann an mindestens einem äußeren Rand der Nut, die an einer äußeren Mantelfläche eines Haltelements und/oder Emissionseinsatzes ausgebildet ist, eine Erhebung vorhanden sein. Eine Erhebung kann auch entlang eines Übergangs zwischen einer Nut und einer Innenwand des Elektrodenhalters oder des Halteelements ausgebildet sein. Mit solchen Erhebungen kann eine zusätzliche formschlüssige Verbindung und eine Verdrehsicherung erreicht werden.

Günstig ist es, wenn der Durchmesser von Bohrungen oder der freie Querschnitt von Vertiefungen im Elektrodenhalter und/oder Halteelement sowie der/die Außendurchmesser der äußeren Mantelflächen des Halteelements und/oder des Emissionseinsatzes, die in eine Bohrung oder Vertiefung zum Fügen einsetzbar sind, so gewählt sind, dass eine Presspassung erreichbar ist. Dabei kann die Presspassung allein durch geeignete Dimensionierung und Werkstoffauswahl mit entsprechend gewählter Kraft beim Einpressen ausgebildet werden. Zusätzlich kann aber auch eine unterschiedliche Temperatur der Fügepartner ausgenutzt werden. So kann beispielsweise ein kälteres Halteelement in eine Bohrung oder Vertiefung eines erwärmten Elektrodenhalters eingeführt werden. Dies ist analog natürlich auch beim Fügen eines Emissionseinsatzes mit einem Elektrodenhalter oder einem Haltelement möglich.

Der freie Querschnitt von Druckausgleichskanälen sollte möglichst klein, aber ausreichend groß für einen Druckausgleich sein.

Elektrodenhalter und Halteelement können aus Kupfer oder einer Kupferlegierung hergestellt sein. Dabei ist eine Silberlegierung besonders vorteilhaft. Der Silberanteil kann dabei bei mindestens 50 % gewählt werden. Elektrodenhalter und Halteelement können aus demselben Werkstoff hergestellt sein.

Nachfolgend soll die Erfindung beispielhaft näher beschrieben werden.

Dabei zeigen:
- Figur 1: ein Beispiel eines Plasmaschneidbrenners in einer Schnittdarstellung;
- Figur 2.1: einen Elektrodenhalter und mit diesem verbundenen Emissionseinsatz;
- Figur 2.2: einen Elektrodenaufbau mit Elektrodenhalter, Halteelement und Emissionseinsatz;
- Figur 2.3: einen Elektrodenaufbau mit Elektrodenhalter, Halteelement und Emissionseinsatz;
- Figur 2.4: einen Elektrodenaufbau mit Elektrodenhalter, Halteelement und Emissionseinsatz;
- Figur 3.1: ein Beispiel eines bei der Erfindung einsetzbaren Elektrodenhalters;
- Figur 3.2: ein weiteres Beispiel eines bei der Erfindung einsetzbaren Elektrodenhalters;
- Figur 3.3: ein weiteres Beispiel eines bei der Erfindung einsetzbaren Elektrodenhalters;
- Figur 4.1: ein Halteelement mit durchgehender Nut als Druckausgleichskanal in einer Draufsicht;
- Figur 4.2: das Halteelement nach Figur 4.1 in einer Seitenansicht;
- Figur 4.3: ein weiteres Beispiel eines Halteelements mit nicht durchgehender Nut in einer Draufsicht;
- Figur 4.4: eine Beispiel eines Halteelements mit nicht durchgehender Nut in einer Seitenansicht;
- Figur 5.1: ein Halteelement mit durchgehender Abflachung in einer Draufsicht;
- Figur 5.2: ein Halteelement mit durchgehender Abflachung in einer Seitenansicht;
- Figur 5.3: ein Halteelement mit nicht durchgehender Abflachung in einer Draufsicht;
- Figur 5.4: ein Halteelement mit nicht durchgehender Abflachung in einer Seitenansicht;
- Figur 6.1: ein mit Stufen ausgebildetes Halteelement mit durchgehender Nut in einer Seitenansicht
- Figur 6.2: ein mit Stufen ausgebildetes Halteelement mit durchgehender Nut in einer Draufsicht;
- Figur 6.3: ein mit Stufen ausgebildetes Halteelement mit nicht durchgehender Nut und Fase in einer Seitenansicht;
- Figur 6.4: ein mit Stufen ausgebildetes Halteelement mit nicht durchgehender Nut und Fase in einer Draufsicht;
- Figur 7.1: ein mit Stufen ausgebildetes Halterelement mit durchgehender Abflachung in einer Seitenansicht;
- Figur 7.2: ein mit Stufen ausgebildetes Halteelement mit durchgehender Abflachung in einer Draufsicht;
- Figur 7.3: ein mit Stufen und konisch ausgebildetes Halteelement mit nicht durchgehender Abflachung in einer Seitenansicht;
- Figur 7.4: ein mit Stufen und konisch ausgebildetes Halteelement mit nicht durchgehender Abflachung in einer Draufsicht;
- Figur 8.1: ein mit Stufen und mit durchgehender Abflachung und durchgehender Nut ausgebildetes Halteelement in einer Seitenansicht;
- Figur 8.2: ein mit Stufen ausgebildetes Halteelement mit durchgehender Abflachung und durchgehender Nut in einer Draufsicht;
- Figur 8.3: ein mit Stufen und hinten konisch und vorn zylindrisch ausgebildetes Halteelement mit nicht durchgehender Abflachung und nicht durchgehender Nut in einer Seitenansicht;
- Figur 8.4: ein mit Stufen und hinten konisch und vorn zylindrisch ausgebildetes Halteelement mit nicht durchgehender Abflachung und nicht durchgehender Nut in einer Draufsicht;
- Figur 9.1: ein Halteelement mit durchgehender zur Mittelachse geneigter Nut in einer Seitenansicht;
- Figur 9.2: ein Halteelement mit nicht durchgehender zur Mittelachse M geneigter Nut in einer Seitenansicht;
- Figur 10.1: einen Elektrodenhalter mit Nut in einer Bohrungsinnenfläche in einer Draufsicht
- Figur 10.2: einen Elektrodenhalter mit Nut in einer Bohrungsinnenfläche in einer geschnittenen Seitenansicht;
- Figur 10.3: einen Elektrodenhalter mit Nut in einer Bohrungsinnenfläche mit Spitze in einer geschnittenen Seitenansicht;
- Figur 11.1: einen Elektrodenhalter mit zur Mittelachse M geneigter Nut in einer Bohrungsinnenfläche in einer Draufsicht;
- Figur 11.2: einen Elektrodenhalter mit zur Mittelachse M geneigter Nut in einer Bohrungsinnenfläche in einer geschnittenen Seitenansicht;
- Figur 11.3: einen Elektrodenhalter mit zur Mittelachse M geneigter Nut in einer Bohrungsinnenfläche mit Spitze in einer geschnittenen Seitenansicht;
- Figur 12.1: einen Emissionseinsatz mit nicht durchgehender Nut und Fase in einer Seitenansicht;
- Figur 12.2: einen Emissionseinsatz mit nicht durchgehender Nut und Fase in einer Draufsicht;
- Figur 12.3: einen konisch ausgebildeten Emissionseinsatz mit nicht durchgehender Nut und Fase in einer Seitenansicht und
- Figuren 13.1 bis 13.5: Beispiele unterschiedlicher Nutformen in Halteelementen oder einem Emissionseinsatz.

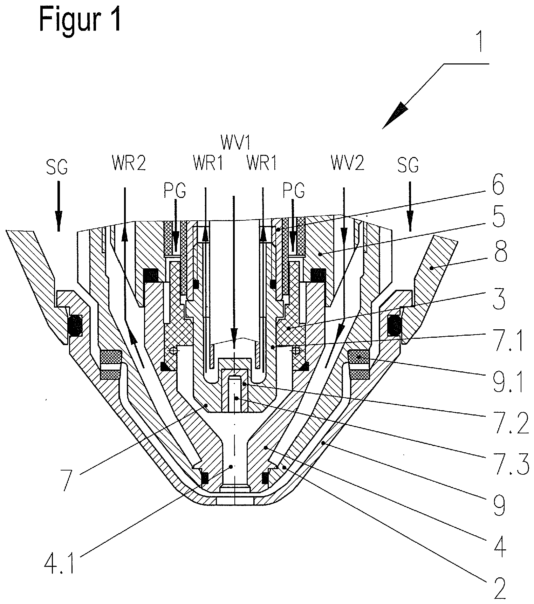

Die Figur 1 zeigt eine Schnittdarstellung eines Plasmaschneidbrenners 1. Mit einer Düsenkappe 2, einer Plasmagaszuführung 3, einer Düse 4 mit Düsenbohrung 4.1, einer Düsenhalterung 5, einer Aufnahme für einen Elektrodenaufbau 6 und einem Elektrodenaufbau 7. Der Elektrodenaufbau 7 ist mit einem Elektrodenhalter 7.1, der mit einem Haltelement 7.2 sowie einem mit dem Halteelement 7.2 verbundenen Emissionseinsatz 7.3 gebildet. Das Bezugszeichen 8 bezeichnet eine Düsenschutzkappenhalterung, an der eine Düsenschutzkappe 9 befestigt ist. Durch die Gasführung 9.1 wird Sekundärgas SG zugeführt. Außerdem sind eine Zuführung für Plasmagas PG, die Kühlmittelrückläufe WR1 und WR2 sowie die Kühlmittelvorläufe WV1 und WV2 am Plasmaschneidbrenner 1 vorhanden.

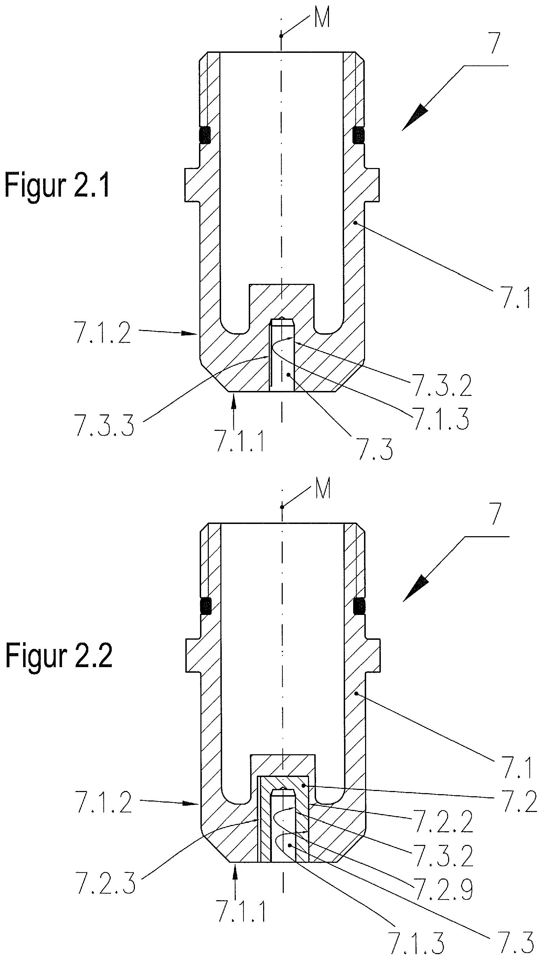

Die Figur 2.1 zeigt ein Beispiel eines Elektrodenaufbaus bei dem in einem Elektrodenhalter 7.1 an einer einem Werkstück zugewandten Stirnseite 7.1.1 eine Bohrung mit dort angeordneter Öffnung ausgebildet ist. In diese Bohrung ist ein Emissionseinsatz 7.3 eingeführt und mit einer Presspassung wurde eine Fügeverbindung hergestellt. Wie aus der Zeichnung ersichtlich ist der Emissionseinsatz 7.3 nicht vollständig in die Bohrung eingeführt, so dass im dem Werkstück abgewandten Stirnseitenbereich des Emissionseinsatzes 7.3 innerhalb der Bohrung ein Hohlraum verblieben ist, in dem Luft enthalten sein kann oder ist. Dabei ist an der äußeren Mantelfläche des Emissionseinsatzes 7.3 eine Nut 7.3.3 ausbildet, die bei diesem Beispiel ausgehend von der dem Werkstück abgewandten Stirnseite des Emissionseinsatzes 7.3 parallel zur mittleren Längsachse M in Richtung der dem Werkstück zugewandten Stirnseite ausgebildet ist. Die Nut 7.3.3 ist aber nicht bis zur dem Werkstück zugewandten Stirnfläche des Emissionseinsatzes 7.3 geführt, so dass dort an radial umlaufender Kontaktbereich vorhanden ist, wenn der Emissionseinsatz 7.3 vollständig in die Bohrung 7.4 des Elektrodenhalters 7.1 eingeführt worden ist. Demzufolge kann der mit der Nut 7.3.3 gebildete Druckausgleichskanal lediglich temporär als solcher beim Einsetzen des Emissionseinsatzes 7.3 in die Bohrung 7.4 genutzt werden.

Die Figur 2.2 zeigt ein Beispiel eines Elektrodenaufbaus, bei dem der Emissionseinsatz 7.3 in eine Bohrung 7.2.1, die in einem Halteelement 7.2 ausgebildet worden ist, eingeführt und dort mit dem Halteelement 7.2 gefügt worden ist. Auch hier ist innerhalb der Bohrung 7.2.1 im Halteelement 7.2 ein Hohlraum vorhanden, der mittels des Emissionseinsatzes 7.3 gasdicht verschlossen ist.
Da auch das Halteelement 7.2 innerhalb einer Bohrung 7.4, die im Elektrodenhalter 7.1 ausgebildet worden ist, in analoger Form fixiert worden ist, kann auch dort in der im Elektrodenhalter 7.1 ausgebildeten Bohrung 7.4 ein Hohlraum vorhanden sein, der mit dem Halteelement 7.2 gasdicht verschlossen ist.

Bei diesem Beispiel ist eine Nut 7.2.3 am Halteelement 7.2 von einer Stirnseite bis zur gegenüberliegenden Stirnseite ausgebildet. Dadurch kann der so ausgebildete Druckausgleichskanal auch nach dem Einsetzen in die Bohrung 7.4 und ggf. auch nach dem Fügen wirksam sein, wenn ein ausreichender freier Querschnitt der Nut 7.2.3 über ihre Länge frei gehalten ist.

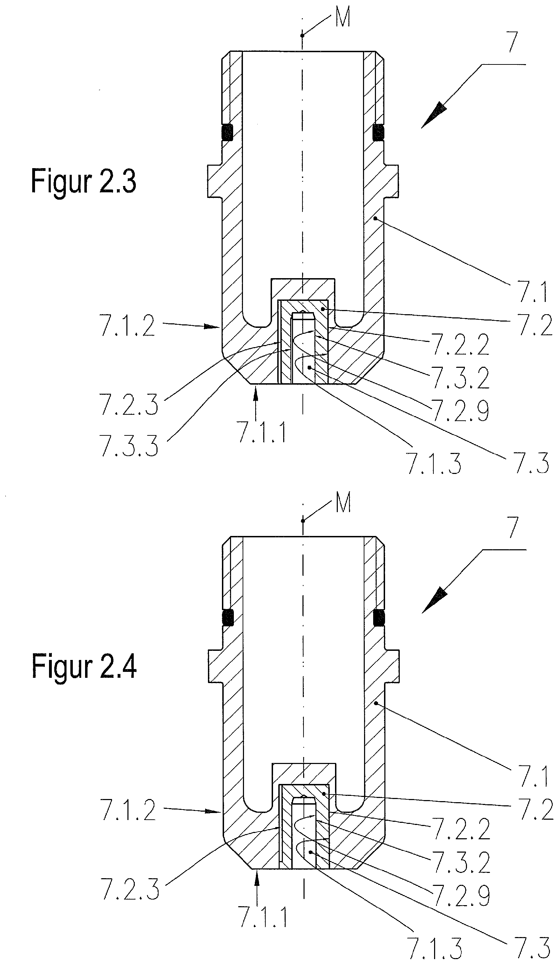

Die Figur 2.3 zeigt ein Beispiel eines Elektrodenaufbaus 7 bei dem der Emissionseinsatz 7.3 in eine Bohrung 7.2.1, die in einem Halteelement 7.2 ausgebildet ist, eingeführt worden ist. Das Halteelement 7.2 ist wiederum in eine Bohrung 7.4 des Elektrodenhalters 7.1 eingeführt und darin mit diesem verbunden.

Dabei sind jeweils eine Nut 7.2.3 an der radial äußeren Mantelfläche des Haltelements 7.2 und eine Nut 7.3.3, wie beim Beispiel nach Figur 2.2 von einer Stirnfläche bis zur gegenüberliegenden Stirnfläche an der radial äußeren Mantelfläche des Halteelements 7.2 geführt. Dadurch besteht die Möglichkeit, dass auch nach dem Einsetzen und ggf. Fügen des Emissionseinsatzes 7.3 in die Bohrung 7.2.1 des Halteelements 7.2 sowie des Halteelements7.2 in die Bohrung 7.4 des Elektrodenhalters 7.1 ein Druckausgleich durch die so gebildeten Druckausgleichskanäle möglich ist.

Das in Figur 2.4 gezeigte Beispiel unterscheidet sich vom Beispiel noch Figur 2.3 dadurch, dass lediglich eine Nut 7.2.3 an der radial äußeren Mantelfläche des Halteelements 7.2 ausgebildet ist und diese Nut 7.2.3, wie beim Beispiel nach Figur 2.1 für die Nut 7.3.3, nicht von einer Stirnfläche bis zur gegenüberliegenden Stirnfläche geführt ist, so dass im dem Werkstück zugewandten Bereich ein Kontaktbereich vorhanden ist, der eine abdichtende Wirkung haben kann, so dass mit der Nut 7.2.3 ein temporär beim Einsetzen des Halteelements 7.2 in die Bohrung 7.4 des Elektrodenhalters 7.1 wirkender Druckausgleichskanal am Halteelement 7.2 ausgebildet worden ist.

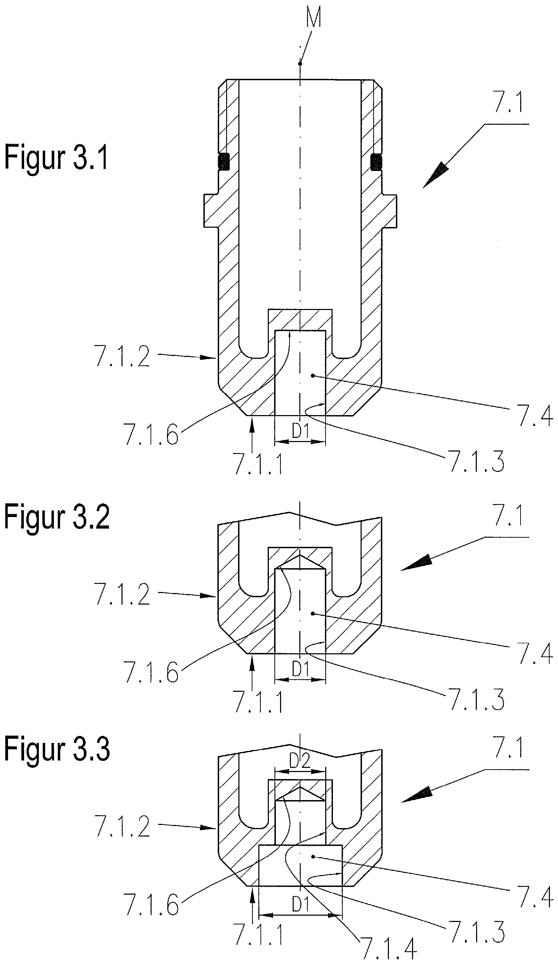

Die Figuren 3.1 bis 3.3 zeigen Beispiele für Bohrungen 7.4, die hier in einem Elektrodenhalter 7.1 ausgebildet sind. Dabei handelt es sich generell um sogenannte Sacklochbohrungen, die jedoch jeweils unterschiedliche Formen der dem Werkstück abgewandten Stirnflächen 7.1.6 aufweisen. Bei dem in Figur 3.3 gezeigten Beispiel weist die Bohrung 7.4 zwei Stufen unterschiedlicher Innendurchmesser D1 und D2 auf. Ein dort einzusetzender Emissionseinsatz 7.3 sollte komplementär gestaltet sein und eine ebenfalls mit zwei Durchmesserstufen ausgebildeter äußerer Mantelfläche ausgebildet sein, die den Durchmessern D1 und D2 entsprechen und ggf. mit ihnen identisch sein sollten.

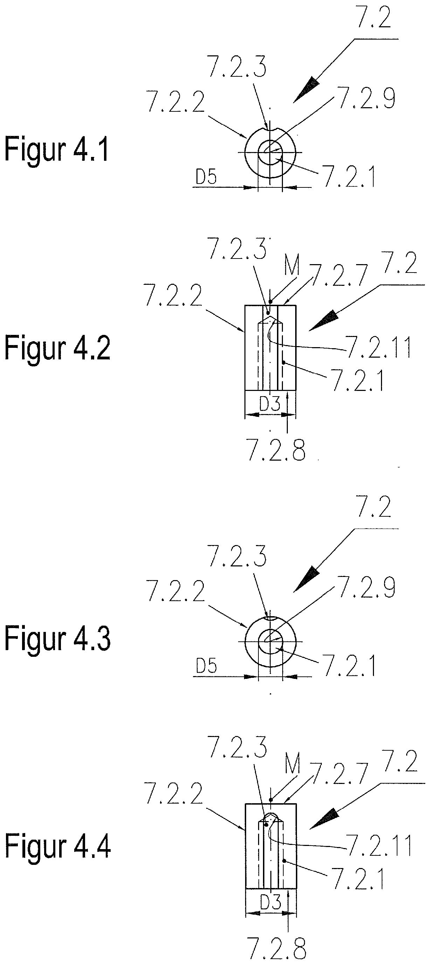

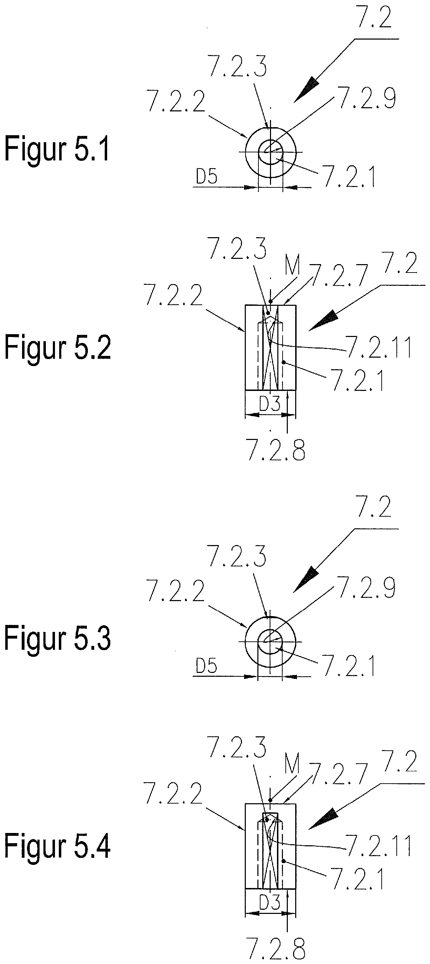

Die Figuren 4.1 und 4.2 zeigen ein Beispiel eines bei der Erfindung einsetzbaren Halteelements 7.2 in zwei Ansichten. Dabei weist das Halteelement 7.2 wieder eine Bohrung 7.2.1 auf, in der ein Emissionseinsatz 7.3 fixiert werden kann. An der äußeren Mantelfläche 7.2.2 des Halteelements 7.2 ist eine Nut 7.2.3 ausgebildet, die wiederum eine Verbindung zwischen Umgebung und dem Hohlraum im inneren der Bohrung 7.4, die im Elektrodenhalter 7.1 wie vorab erläutert worden ausgebildet ist, herstellt, so dass mit der Nut 7.2.3 ein Druckausgleichskanal gebildet ist. Anstelle der Nut 7.2.3 kann auch eine Abflachung gewählt werden, wie sie beispielsweise in Figur 5.1 gezeigt ist.

Das in den Figuren 4.3 und 4.4 gezeigte Beispiel unterscheidet sich vom Beispiel nach den Figuren 4.1 und 4.2 dadurch, dass die Nut 7.2.3 nicht über die gesamte Länge des Halteelements 7.2 also nicht vollständig vom Hohlraum bis zur Umgebung geführt ist und dabei ein Bereich nicht vollständig frei gegeben ist, in dem noch ein vollflächiger Kontakt zwischen Innenwand des Elektrodenhalters 7.1 und der äußeren Mantelfläche des Halteelements 7.2 besteht. Dieser Bereich ist aber so kurz bzw. klein, dass ein Druckausgleich bei sich erhöhendem Innendruck im Hohlraum beim Einpressen des Halteelements 7.2 in den Elektrodenhalter 7.1 möglich ist (siehe auch Figur 2.4).

Die in den Figuren 5.1 bis 5.4 gezeigten Beispiele unterscheiden sich von den Beispielen nach den Figuren 4.1 bis 4.4 lediglich dadurch, dass anstelle einer Nut 7.2.3 eine Abflachung durch einfachen flächigen ebenen Werkstoffabtrag an der äußeren Mantelfläche des Halteelements 7.2 ausgebildet worden ist.

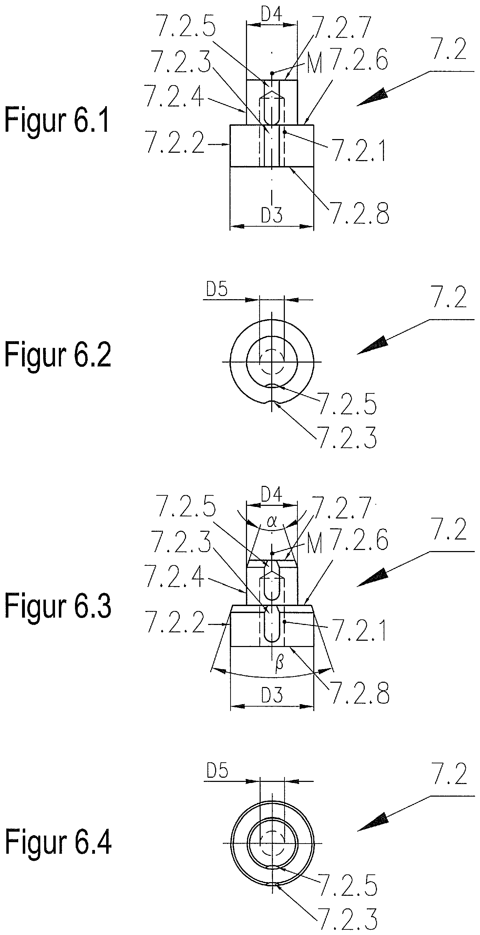

Die in den Figuren 6.1 bis 6.4 gezeigten Beispiele zeigen Halteelemente 7.2 bei denen der Außendurchmesser in zwei Stufen mit den Durchmessern D4 und D3 ausgebildet sind. Dabei ist der Durchmesser D3 größer als D4 und an der dem Werkstück zugewandten Seite angeordnet. Bei dem in den Figuren 6.3 und 6.4 sind an den Stirnflächen 7.2.4 und 7.2.6 an den radial äußeren Kanten Fasen mit einem Winkel α und β ausgebildet.

Außerdem ist im Halteelement 7.2 wieder eine Sacklochbohrung 7.2.1 ausgebildet in die ein Emissionseinsatz 7.3 eingeführt und darin fixiert werden kann. Für die Ausbildung eines Druckausgleichskanals zwischen einem Hohlraum der im dem Werkstück abgewandten stirnseitigen Bereich der Bohrung 7.2.1 im Halteelement 7.2 ausgebildet ist, und der Umgebung, sind zwei Nuten 7.2.3 und 7.2.5 an der radial äußeren Mantelfläche mit den Außendurchmessern D3 und D4 des Halteelements 7.2 ausgebildet. In nicht dargestellter Form könnten solche Nuten allein oder zusätzlich auch an der Innenwand einer Bohrung, die im Elektrodenhalter 7.1 zur Aufnahme des Haltelements 7.2 ausgebildet ist, ausgebildet sein.

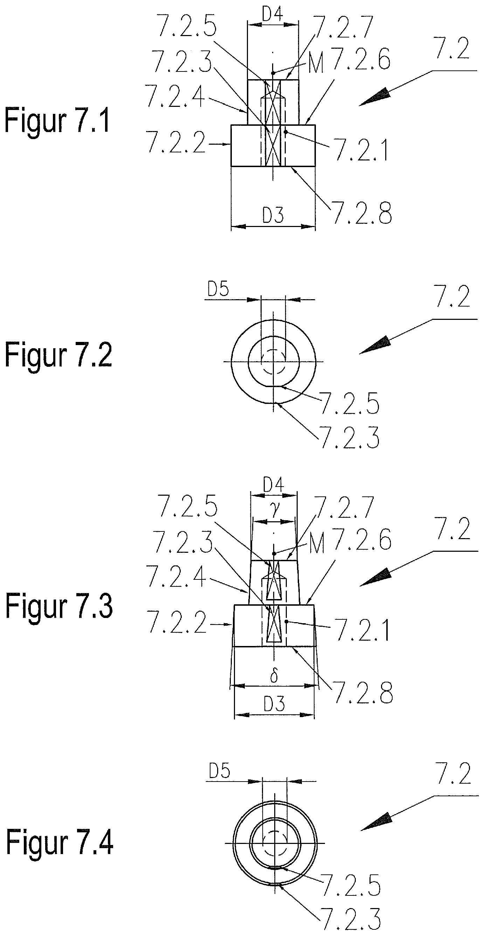

Bei den in den Figuren 7.1 bis 7.4 gezeigten bei der Erfindung einsetzbaren Halteelementen 7.2 sind anstelle der Nuten Abflachungen 7.2.3 und 7.2.5 an den äußeren Mantelflächen 7.2.2 und 7.2.4 für die Ausbildung eines Druckausgleichskanals vorhanden. Es ist wieder eine gestufte Ausbildung mit unterschiedlichen Außendurchmessern D3 und D4 gewählt. Bei dem Beispiel nach den Figuren 7.3 und 7.4 sind die beiden Stufen zusätzlich ausgehend von der dem Werkstück zugewandten Seite sich konisch verjüngend ausgebildet. Dabei wurden die Konuswinkel δ und γ gewählt. Mit dieser Ausbildung kann das Einführen des Halteelements 7.2 in eine Bohrung/Vertiefung, die natürlich komplementär mit den zwei Durchmessern und der konischen Gestaltung ausgebildet sein sollte, erleichtert und die Fügung zwischen Elektrodenhalter 7.1 und dem Halteelement 7.2 sicherer erreicht werden können.

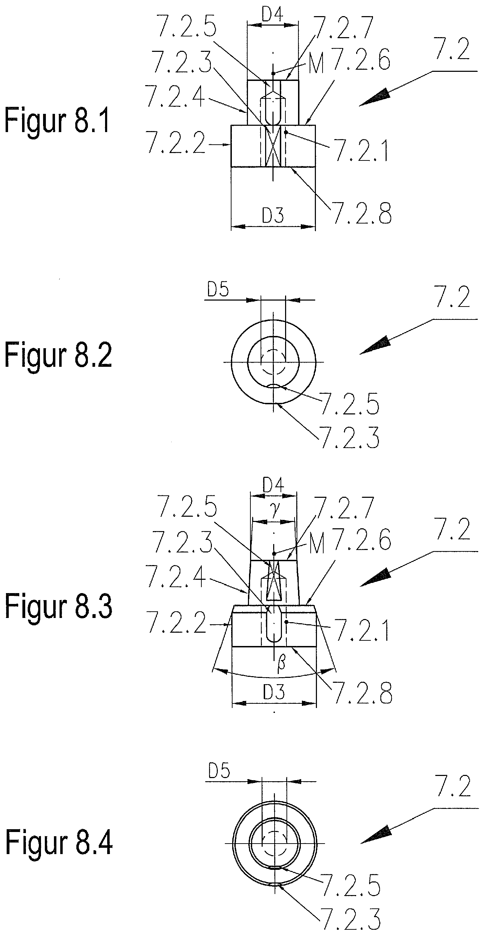

Bei den in den Figuren 8.1 bis 8.4 gezeigten Beispielen für Halteelemente 7.2 sind anstelle der Nuten Abflachungen 7.2.3 und 7.2.5 an der äußeren Mantelfläche des Halteelements 7.2 ausgebildet. Im Inneren ist eine Bohrung 7.2.1 zur Aufnahme des Emissionseinsatzes 7.3 mit dem Durchmesser D5 ausgebildet.

Bei dem in den Figuren 8.3 und 8.4 gezeigten Beispiel weist der dem Werkstück zugewandte Bereich den konstanten Außendurchmesser D3 auf und ist zylindrisch ausgebildet. Der dem Werkstück abgewandte Bereich ist dagegen wieder sich konisch verjüngend mit dem kleinsten Außendurchmesser D4 an der Stirnfläche 7.2.4 ausgebildet. Der Konuswinkel γ ist ebenfalls eingezeichnet. Die Stirnseitenkante, die an der dem Werkstück abgewandten Seite des zylindrischen Bereichs mit dem Durchmesser D3 ist wieder mit einer Fase versehen, die den Winkel β aufweist.

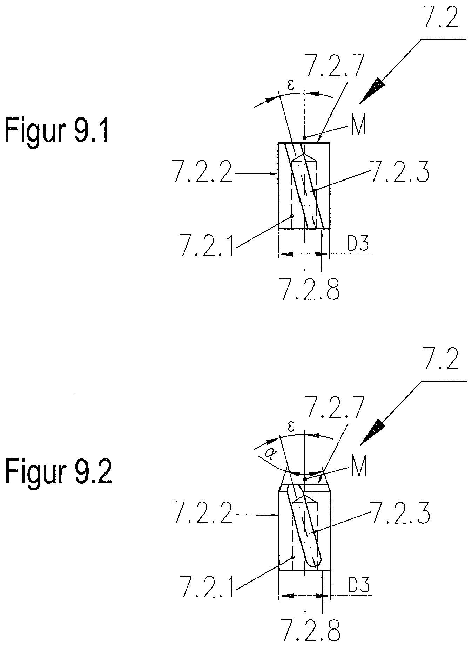

Die Figuren 9.1 und 9.2 zeigen Beispiele für Haltelemente 7.2 bei denen eine Nut 7.2.3 für einen Druckausgleichskanal in einemWinkel ε in Bezug zur mittleren Längsachse M geneigt ausgebildet ist und über die gesamte Länge des Halteelements 7.2 von einer Stirnseitenfläche 7.2.7 bis zur gegenüberliegend angeordneten Stirnseitenfläche 7.2.8 ausgebildet ist. Die Nut 7.2.3 ist dabei an der äußeren Mantelfläche des Halteelements 7.2 ausgebildet. Dabei zeigt Figur 9.1 eine durchgehende und Figur 9.2 eine nicht durchgehende Nut 7.2.3.

An der radial äußeren Stirnflächenkante der Stirnfläche 7.2.7 ist eine Fase mit einem Winkel α ausgebildet, die das Einführen erleichtert und die Bedingungen für einen Druckausgleich zwischen einem Hohlraum, der oberhalb der Stirnseitenfläche 7.2.7 angeordnet ist, und der Umgebung verbessert.

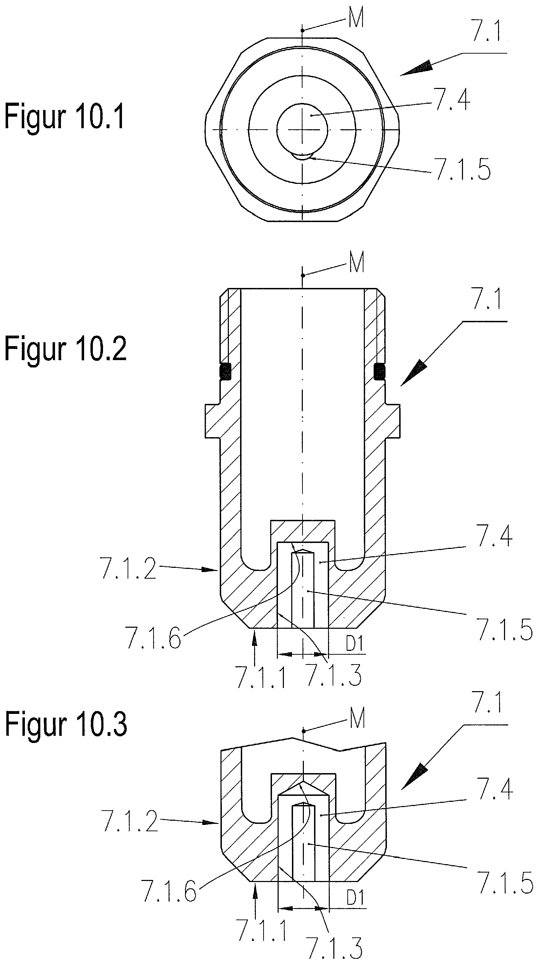

Die Figuren 10.1 und 10.2 zeigen ein und die Figur 10.3 zeigt ein weiteres Beispiel eines Elektrodenhalters 7.1 in verschiedenen Ansichten und in einem Schnitt. Dabei ist im Elektrodenhalter 7.1 eine einseitig offene Bohrung 7.4 für das Einführen und darin fixieren eines Emissionseinsatzes 7.3 vorhanden. An der Innenwand der Bohrung 7.4 ist eine Nut 7.1.5 ausgebildet, die den Druckausgleich zwischen dem Hohlraum der oberhalb der dem Werkstück abgewandten Stirnfläche des in die Bohrung 7.4 eingeführten Emissionseinsatzes 7.3 und der Stirnfläche 7.1.6 der Bohrung 7.4 ausgebildet ist, ermöglicht. Die Bohrung 7.4 hat den Innendurchmesser D1 und endet in Figur 10.2 flach und in Figur 10.3 spitz. Der nicht dargestellte Emissionseinsatz 7.3 sollte einen Außendurchmesser aufweisen, der sehr nah bei diesem Durchmesser D1 liegt, mit ihm identisch oder sogar größer ist, so dass das Fügen mit einer Presspassung möglichst ohne Zusatzwerkstoff erreichbar ist.

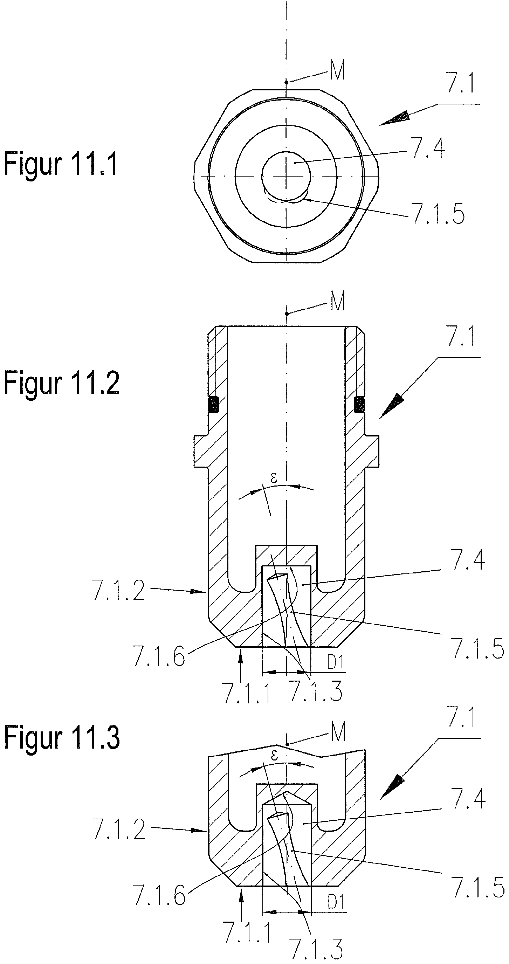

In den Figuren 11.1 bis 11.3 sind Beispiele eines Elektrodenhalters 7.1 gezeigt, das in wesentlichen Punkten dem Beispiel nach den Figuren 10.1 bis 10.3 entspricht. Lediglich die Nut 7.1.5 ist in einem Winkel ε in Bezug zur mittleren Längsachse M geneigt. Die Nut 7.1.5 ist dabei außerdem beispielhaft nicht mit konstantem Querschnitt über ihre Länge ausgehend von der dem Werkstück abgewandten bis zur dem Werkstück zugewandten Seite ausgebildet.

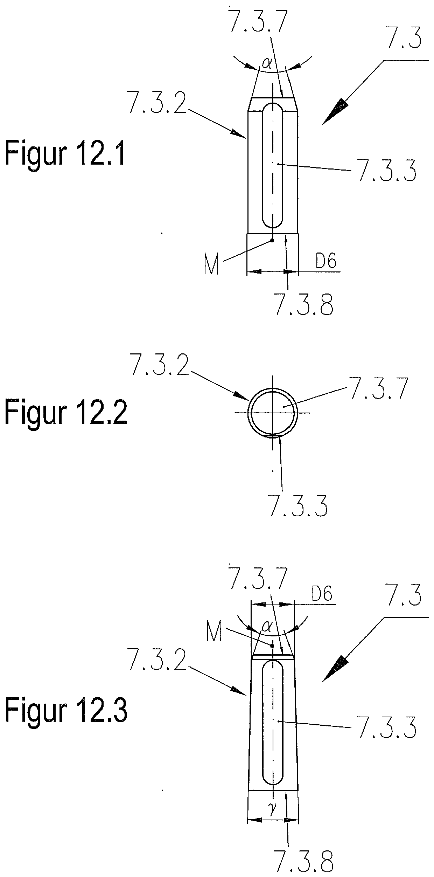

In den Figuren 12.1 bis 12.2 sind Beispiele eines Emissionseinsatzes 7.3 gezeigt, die den Außendurchmesser D6 aufweisen. Bei dem in Figur 12.1 gezeigten Beispiel ist der Emissionseinsatz 7.3 zylindrisch mit konstantem Außendurchmesser D6 ausgebildet. Lediglich an der dem Werkstück abgewandten Seite ist im Stirnkantenbereich eine Fase mit dem Winkel α ausgebildet.

An der äußeren Mantelfläche ist eine Nut 7.3.3 ausgebildet, die bei diesem Beispiel nicht vollständig von einer Stirnfläche 7.3.7 bis zur gegenüberliegenden Stirnfläche 7.3.8 reicht. Es verbleibt dadurch ein kleiner Bereich der äußeren Mantelfläche des Emissionseinsatzes 7.3 bei dem ein radial umlaufender Kontakt zwischen der äußeren Mantelfläche des Emissionseinsatzes 7.3 und der Innenwand einer Bohrung 7.4, die in einem Elektrodenhalter 7.1 oder einem Halteelement 7.2 ausgebildet ist, und in die der Emissionseinsatz 7.3 eingeführt werden kann, vorhanden ist. Dieser Bereich schließt sich unmittelbar an die dem Werkstück zugewandte Stirnfläche 7.3.8 des Emissionseinsatzes 7.3 an. Da dieser Kontaktbereich aber sehr klein ist, kann trotzdem bei entsprechendem Druckanstieg beim Einpressen des Emissionseinsatzes 7.3 in den Elektrodenhalter 7.1 oder das Halteelement 7.2 in einem Hohlraum, der an der dem Werkstück abgewandten Stirnfläche 7.3.7 angeordnet ist, ein Druckausgleich an die Umgebung erfolgen.
Bei dem in Figur 12.3 gezeigten Beispiel ist der Emissionseinsatz 7.3 außen in Richtung der dem Werkstück abgewandten Seite mit dem Winkel γ sich konisch verjüngend ausgebildet und an der Stirnseitenkante der Stirnseitenfläche 7.3.7 ist eine Fase mit dem Fasenwinkel α ausgebildet.

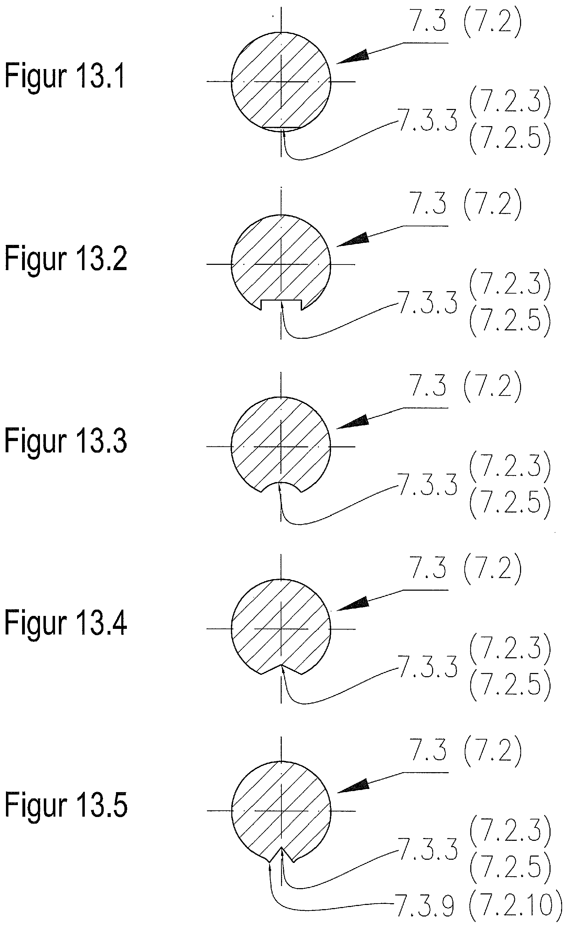

In den Figuren 13.1 bis 13.5 sind mehrere Beispiele für geometrische Gestaltungen von Nuten oder Abflachungen 7.2.3, 7.2.5 oder 7.3.3 gezeigt, wie sie an äußeren Mantelflächen eines Halteelements 7.2 oder eines Emissionseinsatzes 7.3 ausgebildet sein können. In analoger Form können diese Geometrien aber auch bei Nuten, die an Innenwänden von Bohrungen 7.4 bzw. 7.2.1 ausgebildet sind, genutzt werden.

Bei dem in Figur 13.5 gezeigten Beispiel sind an den äußeren Kanten der Nut 7.3.3 Erhebungen 7.3.9 ausgebildet, die eine Verdrehsicherung und eine verbesserte sicherere Fixierung beim Fügen durch Formschluss eines Emissionseinsatzes 7.3 oder eines Halteelements 7.2 mit einem Halteelement 7.2 oder einem Elektrodenhalter 7.1 in einer entsprechenden Bohrung 7.2.1 oder 7.4 erreicht werden kann.

### Bezugszeichenliste

- 1: Plasmabrenner
- 2: Düsenkappe
- 3: Plasmagasführung
- 4: Düse
- 4.1: Düsenbohrung
- 5: Düsenhalterung
- 6: Elektrodenaufnahme
- 7: Elektrode oder Elektrodenaufbau
- 7.1: Elektrodenhalter
- 7.1.1: vordere Fläche
- 7.1.2: Außenfläche
- 7.1.3: Innenfläche
- 7.1.4: Innenfläche
- 7.1.5: Nut oder Abflachung
- 7.1.6: Innenfläche
- 7.2: Halteelement
- 7.2.1: Bohrung
- 7.2.2: Außenfläche
- 7.2.3: Nut oder Abflachung
- 7.2.4: Außenfläche
- 7.2.5: Nut oder Abflachung
- 7.2.6: Fläche
- 7.2.7: Werkstück abgewandte Stirnfläche
- 7.2.8: Werkstück zugewandte Stirnfläche
- 7.2.9: Innenwand
- 7.2.10: Erhebung
- 7.2.11: Innenfläche am Ende der Bohrung 7.2.1
- 7.3: Emissionseinsatz
- 7.3.2: äußere Mantelfläche
- 7.3.3: Nut oder Abflachung
- 7.3.7: Werkstück abgewandte Stirnfläche
- 7.3.8: Werkstück zugewandte Stirnfläche
- 7.3.9: Erhebung zwischen Nut und Außenfläche
- 7.4: Bohrung
- 8: Düsenschutzkappenhalterung
- 9: Düsenschutzkappe
- 9.1: Sekundärgasführung
- D1: Innendurchmesser
- D2: Innendurchmesser
- D3: Außendurchmesser
- D4: Außendurchmesser
- D5: Innendurchmesser
- M: mittlere Längsachse
- PG: Plasmagas
- SG: Sekundärgas
- WR1: Kühlmittelrücklauf
- WR2: Kühlmittelrücklauf
- WV1: Kühlmittelvorlauf
- WV2: Kühlmittelvorlauf
- α: Winkel (Fasenwinkel)
- β: Winkel (Fasenwinkel)
- γ: Winkel (Konuswinkel)
- δ: Winkel (Konuswinkel)
- ε: Winkel

## Patentansprüche

1. Elektrodenaufbau für Plasmaschneidbrenner, bei dem zur Aufnahme eines Emissionseinsatzes eine einseitig in Richtung eines zu bearbeitenden Werkstückes offene Vertiefung oder Bohrung in einem Elektrodenhalter oder einem Haltelement ausgebildet ist, in der der eingesetzte Emissionseinsatz kraft-, form- und/oder stoffschlüssig befestigbar ist, **dadurch gekennzeichnet, dass**
zwischen einem in einer Vertiefung oder Bohrung (7.2.1, 7.4) und dem Emissionseinsatz (7.3) ausgebildeten Hohlraum und der Umgebung mindestens ein zumindest temporär wirksamer Druckausgleichskanal durch den Emissionseinsatz (7.3) hindurch und/oder zwischen einem äußeren Mantelflächenbereich des Emissionseinsatzes (7.3) und der Innenwand der Vertiefung oder Bohrung (7.2.1, 7.4) vorhanden ist und/oder
mindestens ein temporär wirksamer Druckausgleichskanal zwischen einem in einer Vertiefung oder Bohrung (7.4) und dem Haltelement (7.2) ausgebildeten Hohlraum und der Umgebung durch das Haltelement (7.2) hindurch und/oder zwischen einem äußeren Mantelflächenbereich des Haltelements (7.2) und der Innenwand der Vertiefung oder Bohrung (7.4) vorhanden ist.

2. Elektrodenaufbau für Plasmaschneidbrenner, bei dem zur Aufnahme eines Emissionseinsatzes eine einseitig in Richtung eines zu bearbeitenden Werkstückes offene Vertiefung oder Bohrung in einem Elektrodenhalter oder einem Haltelement ausgebildet ist, in der der eingesetzte Emissionseinsatz kraft-, form- und/oder stoffschlüssig befestigbar ist, **dadurch gekennzeichnet, dass**
zwischen einem in einer Vertiefung oder Bohrung (7.2.1, 7.4) und dem Emissionseinsatz (7.3) ausgebildeten Hohlraum und der Umgebung mindestens ein zumindest temporär wirksamer Druckausgleichskanal durch den Emissionseinsatz (7.3) hindurch und/oder zwischen einem äußeren Mantelflächenbereich des Emissionseinsatzes (7.3) und der Innenwand der Vertiefung oder Bohrung (7.2.1, 7.4), die im Halteelement (7.2) oder dem Elektrodenhalter (7.1) ausgebildet ist, vorhanden ist und/oder
mindestens ein temporär wirksamer Druckausgleichskanal zwischen einem in einer Vertiefung oder Bohrung (7.2.1) und dem Haltelement (7.2) ausgebildeten Hohlraum und der Umgebung durch das Haltelement (7.2) hindurch und/oder zwischen einem äußeren Mantelflächenbereich des Haltelements (7.2) und der Innenwand der Vertiefung oder Bohrung (7.4), die im Elektrodenhalter (7.1) oder dem Halteelement (7.2) ausgebildet ist, vorhanden ist; wobei ein temporär wirksamer Druckausgleichskanal als eine Nut oder Abflachung (7.2.3, 7.2.5, 7.3.3) ausgebildet ist, die ausgehend vom Hohlraum bis in einen Bereich nahe der dem Werkstück zugewandten Stirnseite (7.2.8) eines Halteelements (7.2) und/oder Emissionseinsatzes (7.3) geführt ist, so dass in diesem Bereich dieser Stirnseite (7.2.8) ein radial umlaufender vollflächiger Kontakt zwischen der Innenwand des Elektrodenhalters (7.1) und der äußeren Mantelfläche (7.2.2) des Halteelements (7.2) und/oder der Innenwand des Haltelements (7.2) und der äußeren Mantelfläche(7.3.2) des Emissionseinsatzes (7.3) zumindest bei normaler Raumtemperatur eingehalten ist.

3. Elektrodenaufbau nach Anspruch 1, **dadurch gekennzeichnet, dass** ein Druckausgleichskanal als Bohrung, Nut oder einer Abflachung (7.2.3, 7.2.5, 7.3.3) an einer äußeren Mantelfläche (7.2.2, 7.2.4, 7.3.2) ausgebildet ist.

4. Elektrodenaufbau nach einem der vorhergehenden Ansprüche, **dadurch gekennzeichnet, dass** bei einem Druckausgleichskanal, der mit einer Nut oder Abflachung (7.2.5) ausgebildet ist, im Fügebereich eines Emissionseinsatzes (7.3) mit einem Halteelement (7.2) oder einem Elektrodenhalter (7.1) eine Kontaktfläche zwischen der äußeren Mantelfläche des Emissionseinsatzes (7.3) oder des Halteelements (7.2) und der Innenwand des Haltelementes (7.2) oder des Elektrodenhalters (7.1) von mindestens 90 %, bevorzugt mindestens 93 % und besonders bevorzugt von mindestens 96 % der gesamten Oberfläche im Fügebereich eingehalten ist.

5. Elektrodenaufbau nach einem der vorhergehenden Ansprüche, **dadurch gekennzeichnet, dass** ein Druckausgleichskanal parallel oder in einem Winkel ε in Bezug zur mittleren Längsachse M geneigt ist, wobei ein Neigungswinkel von maximal 45 °, bevorzugt maximal 30° und besonders bevorzugt von maximal 15° eingehalten ist.

6. Elektrodenaufbau nach einem der vorhergehenden Ansprüche, **dadurch gekennzeichnet, dass** eine Bohrung oder Vertiefung (7.2.1, 7.4) zumindest in einem Bereich ausgehend von der Öffnung sich konisch verjüngend und/oder mit abgestuftem Innendurchmesser oder freiem Querschnitt und eine äußere Mantelfläche (7.2.2, 7.2.4, 7.3.2) des Halteelements (7.2) und/oder des Emissionseinsatzes (7.3) komplementär dazu ausgebildet ist/sind.

7. Elektrodenaufbau nach einem der vorhergehenden Ansprüche, **dadurch gekennzeichnet, dass** eine äußere Mantelfläche (7.2.2, 7.2.4, 7.3.2) eines Haltelements (7.2) und/oder eines Emissionseinsatzes (7.3) in einem Winkel γ im Bereich 1° bis 5°, bevorzugt 1° bis 3° in Bezug zur mittleren Längsachse M geneigt und/oder eine Fase mit einem Winkel im Bereich 10° bis 40°, bevorzugt 10° bis 20° an einer radial äußeren Stirnseitenkante ausgebildet ist.

8. Elektrodenaufbau nach einem der vorhergehenden Ansprüche, **dadurch gekennzeichnet, dass** an einem mit einer Nut (7.2.3, 7.2.5, 7.3.3) ausgebildeten Druckausgleichskanal an mindestens einem äußeren Rand der Nut (7.2.3, 7.2.5, 7.3.3), die an einer äußeren Mantelfläche eines Haltelements (7.2) und/oder Emissionseinsatzes (7.3) ausgebildet ist, eine Erhebung (7.2.10, 7.3.9) vorhanden ist.

9. Elektrodenaufbau nach einem der vorhergehenden Ansprüche, **dadurch gekennzeichnet, dass** entlang eines Übergangs zwischen einer Nut (7.2.3, 7.2.5, 7.33) und einer Innenwand (7.1.3) einer Bohrung oder Vertiefung (7.2.1, 7.4) des Elektrodenhalters (7.1) oder des Halteelements (7.2) eine Erhebung (7.3.9) ausgebildet ist.

10. Elektrodenaufbau nach einem der vorhergehenden Ansprüche, **dadurch gekennzeichnet, dass** der Durchmesser von Bohrungen (7.2.1, 7.4) oder der freie Querschnitt von Vertiefungen im Elektrodenhalter (7.1) und/oder Halteelement (7.2) sowie der/die Außendurchmesser der äußeren Mantelflächen (7.2.2, 7.2.4, 7.3.2) des Halteelements (7.2) und/oder des Emissionseinsatzes (7.3), die in eine Bohrung oder Vertiefung (7.2.1, 7.4) zum Fügen einsetzbar sind, so gewählt sind, dass eine Presspassung erreichbar ist.

## Claims

1. Electrode structure for plasma cutting torches, in which for receiving an emission insert a depression or bore that on one side is open in the direction of a workpiece to be machined is configured in an electrode holder or a holding element, in which the inserted emission insert is fastenable in a force-fitting, form-fitting, and/or materially integral manner,
**characterized in that**
an at least temporarily effective pressure-equalization duct through the emission insert (7.3) and/or between an external shell surface region of the emission insert (7.3) and the inner wall of the depression or bore (7.2.1, 7.4) is present in a cavity configured between a depression or bore (7.2.1, 7.4) and the emission insert (7.3) and the environment
and/or at least one temporarily effective pressure-equalization duct is present through a cavity configured in a depression or bore (7.4) and the holding element (7.2) and the environment through the holding element (7.2) and/or between an external shell surface region of the holding element (7.2) and the inner wall of the depression or bore (7.4).

2. Electrode structure for plasma cutting torches, in which for receiving an emission insert a depression or bore that on one side is open in the direction of a workpiece to be machined is configured in an electrode holder or a holding element, in which the inserted emission insert is fastenable in a force-fitting, form-fitting, and/or materially integral manner,
**characterized in that**
an at least temporarily effective pressure-equalization duct through the emission insert (7.3) and/or between an external shell surface region of the emission insert (7.3) and the inner wall of the depression or bore (7.2.1, 7.4) which is configured in the holding element (7.2) or the electrode holder (7.1), is present between a cavity that is configured in a depression or bore (7.2.1, 7.4) and the emission insert (7.3) and the environment,
and/or at least one temporarily effective pressure-equalization duct through the holding element (7.2) is present between a cavity that is configured in a depression or bore (7.2.1) and the holding element (7.2) and the environment and/or between an external shell surface region of the holding element (7.2) and the inner wall of the depression or bore (7.4) which is configured in the electrode holder (7.1) or the holding element (7.2), wherein a temporarily effective pressure-equalization duct is configured as a groove or a flattening (7.2.3, 7.2.5, 7.3.3) which proceeding from the cavity leads into a region close to that end side (7.2.8) of a holding element (7.2) and/or emission insert (7.3) that faces the workpiece, such that a radially encircling contact across the entire area between the inner wall of the electrode holder (7.1) and the external shell surface (7.2.2) of the holding element (7.2) and/or the inner wall of the holding element (7.2) and the external shell surface (7.3.2) of the emission insert (7.3) is adhered to in this region of this end side (7.2.8), at least at a normal room temperature.

3. Electrode structure according to Claim 1,
**characterized in that** a pressure-equalization duct is configured as a bore, groove, or a flattening (7.2.3, 7.2.5, 7.3.3) on an external shell surface (7.2.2, 7.2.4, 7.3.2).

4. Electrode structure according to one of the preceding claims, **characterized in that**, in the case of a pressure-equalization duct which is configured by way of a groove or flattening (7.2.5), in the joint region of an emission insert (7.3) to a holding element (7.2) or to an electrode holder (7.1) a contact face between the external shell surface of the emission insert (7.3) or of the holding element (7.2) and the inner wall of the holding element (7.2) or of the electrode holder (7.1) of at least 90%, preferably at least 93%, and particularly preferably of at least 96% of the entire surface in the joint region is maintained.

5. Electrode structure according to one of the preceding claims, **characterized in that** a pressure-equalization duct is parallel with the central longitudinal axis M or in relation to the latter is inclined at an angle ε, wherein an inclination angle of at most 45°, preferably at most 30°, and particularly preferably at most 15° is maintained.

6. Electrode structure according to one of the preceding claims, **characterized in that** a bore or depression (7.2.1, 7.4) at least in a region proceeding from the opening is configured so as to be conically tapered and/or so as to have a stepped internal diameter or a free cross section, and an external shell surface (7.2.2, 7.2.4, 7.3.2) of the holding element (7.2) and/or of the emission insert (7.3) are/is configured so as to be complementary to the former.

7. Electrode structure according to one of the preceding claims, **characterized in that** an external shell surface (7.2.2, 7.2.4, 7.3.2) of a holding element (7.2) and/or of an emission insert (7.3) in relation to the central longitudinal axis M is inclined at an angle γ in the range from 1° to 5°, preferably from 1° to 3°, and/or a chamfer having an angle in the range from 10° to 40°, preferably from 10° to 20°, is configured on a radially outward end-side edge.

8. Electrode structure according to one of the preceding claims, **characterized in that** an elevation (7.2.10, 7.3.9) is present on a pressure-equalization duct that is configured having a groove (7.2.3, 7.2.5, 7.3.3) on at least one external periphery of the groove (7.2.3, 7.2.5, 7.3.3) that is configured on an external shell surface of a holding element (7.2) and/or emission insert (7.3).

9. Electrode structure according to one of the preceding claims, **characterized in that** an elevation (7.3.9) is configured along a transition between a groove (7.2.3, 7.2.5, 7.33) and an inner wall (7.1.3) of a bore or depression (7.2.1, 7.4) of the electrode holder (7.1) or of the holding element (7.2).

10. Electrode structure according to one of the preceding claims, **characterized in that** the diameter of bores (7.2.1, 7.4) or the free cross section of depressions in the electrode holder (7.1) and/or holding element (7.2), and the external diameter(s) of the external shell surfaces (7.2.2., 7.2.4, 7.3.2) of the holding element (7.2) and/or of the emission insert (7.3) that for joining are insertable in a bore or depression (7.2.1, 7.4) are chosen such that an interference fit is achievable.

## Revendications

1. Structure d'électrodes pour torches de coupage au plasma, dans laquelle un creux ou alésage ouvert d'un côté en direction d'une pièce à usiner est constitué dans un porte-électrode ou un élément de retenue pour recevoir un insert d'émission et dans lequel l'insert d'émission introduit peut être fixé par liaison de force, de forme et/ou de matière, **caractérisée en ce que**,
entre une cavité constituée dans un creux ou alésage (7.2.1, 7.4) et l'insert d'émission (7.3) et l'environnement, il y a au moins un canal d'équilibrage de pression actif au moins temporairement à travers l'insert d'émission (7.3) et/ou entre une zone de surface d'enveloppe extérieure de l'insert d'émission (7.3) et la paroi intérieure du creux ou de l'alésage (7.2.1, 7.4), et/ou
il y a au moins un canal d'équilibrage de pression actif temporairement entre une cavité constituée dans un creux ou alésage (7.4) et l'élément de retenue (7.2) et l'environnement à travers l'élément de retenue (7.2) et/ou entre une zone de surface d'enveloppe extérieure de l'élément de retenue (7.2) et la paroi intérieure du creux ou de l'alésage (7.4).

2. Structure d'électrodes pour torches de coupage au plasma, dans laquelle un creux ou alésage ouvert d'un côté en direction d'une pièce à usiner est constitué dans un porte-électrode ou un élément de retenue pour recevoir un insert d'émission et dans lequel l'insert d'émission introduit peut être fixé par liaison de force, de forme et/ou de matière, **caractérisée en ce que**,
entre une cavité constituée dans un creux ou alésage (7.2.1, 7.4) et l'insert d'émission (7.3) et l'environnement, il y a au moins un canal d'équilibrage de pression actif au moins temporairement à travers l'insert d'émission (7.3) et/ou entre une zone de surface d'enveloppe extérieure de l'insert d'émission (7.3) et la paroi intérieure du creux ou de l'alésage (7.2.1, 7.4) qui est constitué dans l'élément de retenue (7.2) ou dans le porte-électrode (7.1) et/ou
il y a au moins un canal d'équilibrage de pression actif temporairement entre une cavité constituée dans un creux ou alésage (7.2.1) et l'élément de retenue (7.2) et l'environnement à travers l'élément de retenue (7.2) et/ou entre une zone de surface d'enveloppe extérieure de l'élément de retenue (7.2) et la paroi intérieure du creux ou de l'alésage (7.4) qui est constitué dans le porte-électrode (7.1) ou l'élément de retenue (7.2) ; un canal d'équilibrage de pression actif temporairement étant constitué en tant que rainure ou méplat (7.2.3, 7.2.5, 7.3.3) qui est guidé(e) à partir de la cavité jusque dans une zone près du côté frontal (7.2.8), tourné vers la pièce, d'un élément de retenue (7.2) et/ou insert d'émission (7.3) de telle sorte que, dans cette zone de ce côté frontal (7.2.8), il est maintenu un contact radial périphérique sur toute la surface entre la paroi intérieure du porte-électrode (7.1) et la surface d'enveloppe extérieure (7.2.2) de l'élément de retenue (7.2) et/ou la paroi intérieure de l'élément de retenue (7.2) et la surface d'enveloppe extérieure (7.3.2) de l'insert d'émission (7.3) au moins à la température ambiante normale.

3. Structure d'électrodes selon la revendication 1, **caractérisée en ce qu'**un canal d'équilibrage de pression est constitué sur une surface d'enveloppe extérieure (7.2.2, 7.2.4, 7.3.2) en tant qu'alésage, rainure ou méplat (7.2.3, 7.2.5, 7.3.3).

4. Structure d'électrodes selon l'une des revendications précédentes, **caractérisée en ce que**, dans le cas d'un canal d'équilibrage de pression qui est constitué avec une rainure ou un méplat (7.2.5), dans la zone d'assemblage d'un insert d'émission (7.3) avec un élément de retenue (7.2) ou un porte-électrode (7.1), une surface de contact entre la surface d'enveloppe extérieure de l'insert d'émission (7.3) ou de l'élément de retenue (7.2) et la paroi intérieure de l'élément de retenue (7.2) ou du porte-électrode (7.1) d'au moins 90 %, de préférence d'au moins 93 % et de façon particulièrement préférée d'au moins 96 % de la surface totale est maintenue dans la zone d'assemblage.

5. Structure d'électrodes selon l'une des revendications précédentes, **caractérisée en ce qu'**un canal d'équilibrage de pression est parallèle ou incliné en formant un angle ε par rapport à l'axe longitudinal médian M, un angle d'inclinaison de 45° maximum, de préférence de 30° et de façon particulièrement préférée de 15° étant respecté.

6. Structure d'électrodes selon l'une des revendications précédentes, **caractérisée en ce qu'**un creux ou alésage (7.2.1, 7.4) au moins dans une zone se rétrécissant de façon conique à partir de l'ouverture et/ou avec un diamètre intérieur étagé ou avec une section transversale libre, et une surface d'enveloppe extérieure (7.2.2, 7.2.4, 7.3.2) de l'élément de retenue (7.2) et/ou de l'insert d'émission (7.3) est constitué / sont constitués de façon complémentaire.

7. Structure d'électrodes selon l'une des revendications précédentes, **caractérisée en ce qu'**une surface d'enveloppe extérieure (7.2.2, 7.2.4, 7.3.2) d'un élément de retenue (7.2) et/ou d'un insert d'émission (7.3) est inclinée en formant un angle γ dans la plage de 1° à 5°, de préférence de 1° à 3° par rapport à l'axe longitudinal médian M, et/ou un chanfrein ayant un angle dans la plage de 10° à 40°, de préférence de 10° à 20°, est constitué sur une arête de côté frontal extérieure radiale.

8. Structure d'électrodes selon l'une des revendications précédentes, **caractérisée en ce que**, sur un canal d'équilibrage de pression constitué avec une rainure (7.2.3, 7.2.5, 7.3.3), sur au moins un bord extérieur de la rainure (7.2.3, 7.2.5, 7.3.3) qui est constituée sur une surface d'enveloppe extérieure d'un élément de retenue (7.2) et/ou d'un insert d'émission (7.3), il y a une surélévation (7.2.10, 7.3.9).

9. Structure d'électrodes selon l'une des revendications précédentes, **caractérisée en ce que**, le long d'une transition entre une rainure (7.2.3, 7.2.5, 7.3.3) et une paroi intérieure (7.1.3) d'un creux ou alésage (7.2.1, 7.4) du porte-électrode (7.1) ou de l'élément de retenue (7.2), il est constitué une surélévation (7.3.9).

10. Structure d'électrodes selon l'une des revendications précédentes, **caractérisée en ce que** le diamètre d'alésages (7.2.1, 7.4) ou la section transversale libre de creux dans le porte-électrode (7.1) et/ou l'élément de retenue (7.2) ainsi que le/les diamètre(s) extérieur(s) des surfaces d'enveloppe extérieures (7.2.2, 7.2.4, 7.3.2) de l'élément de retenue (7.2) et/ou de l'insert d'émission (7.3) qui peuvent être introduits dans un alésage ou creux (7.2.1, 7.4) pour l'assemblage sont choisis de telle sorte qu'un ajustement serré peut être obtenu.
